Europäisches Patentamt

European Patent Office

Office européen des brevets

(19)

(11) Numéro de publication: **0 089 438**
**B1**

(12) **FASCICULE DE BREVET EUROPÉEN**

(45) Date de publication du fascicule du brevet:
02.07.86

(21) Numéro de dépôt: 82400497.2

(22) Date de dépôt: 18.03.82

(51) Int. Cl.⁴: **B 21 D 53/36, F 16 L 33/08**

(54) Procédé de fabrication d'un collier de serrage.

(43) Date de publication de la demande:
28.09.83 Bulletin 83/39

(45) Mention de la délivrance du brevet:
02.07.86 Bulletin 86/27

(84) Etats contractants désignés:
BE DE FR GB IT NL

(56) Documents cité:
DE-A-1 962 995
DE-A-2 520 514
DE-A-2 702 415
DE-B-2 506 589
GB-A-1 151 238
US-A-3 650 141
US-A-4 021 892

(73) Titulaire: Etablissements CAILLAU Société à
responsabilité limitée dite:, 4, rue Béranger,
F-92100 Boulogne- Billancourt (FR)

(72) Inventeur: Calmettes, Lionel, 3, rue des Glycines,
F-77330 Ozoir- la- Ferriere (FR)

(74) Mandataire: Descourtieux, Philippe, CABINET
BEAU de LOMENIE 55 rue d'Amsterdam, F-75008
Paris (FR)

## Description

La présente invention concerne les colliers de serrage du type utilisé couramment pour la fixation par serrage d'un tuyau ou analogue, par exemple en caoutchouc, en matière plastique ou en un matériau comparable, sur un tube, un embout, un raccord ou un support analogue.

Il est usuel de réaliser les colliers de serrage de ce type à partir d'une bande de métal qui est munie vers une extrémité de profilages, reliefs, encoches, etc. pour l'attaque des filets d'une vis montée de façon à pouvoir tourner dans une cosse ou boîte fixée elle-même vers l'autre extrémité de la bande du collier. Différentes solutions ont déjà été proposées pour la réalisation et la fixation de cette cosse sur la bande. La solution la plus classique consiste actuellement à réaliser la fixation d'une cosse en une ou deux parties sur la bande par sertissage.

La fabrication des colliers de serrage connus de ce type exige en conséquence d'abord la découpe et la frappe de la bande pour la formation des profilages ou encoches prévus vers une extrémité, la fabrication d'une cosse la fabrication d'une vis, et le montage du collier par la fixation de cette cosse sur la bande et par la mise en place de la vis et sa rétention dans la cosse.

Cette réalisation des colliers de serrage des types connus présente divers inconvénients. Tout d'abord on constate qu'au minimum trois éléments sont nécessaires et que l'opération d'assemblage doit s'effectuer à la main. Par ailleurs, lorsque la fixation de la cosse sur la bande du collier est réalisée par sertissage, d'une manière en soi classique il en résulte la présence d'une saillie due au sertissage au-dessous de la cosse, le métal pénétrant alors dans la matière du tuyau au niveau de cette saillie. En outre, la partie correspondant à la zone de fixation de la cosse sur la bande du collier présente une rigidité notable du fait de la double épaisseur de matière présente à cet endroit, et cette rigidité peut être gênante dans le cas de colliers destinés à être serrés sur des tuyaux de petit diamètre. Enfin la résistance de la fixation de la cosse sur la bande pose certains problèmes lorsque le serrage a lieu sous l'effet d'un couple relativement élevé, et des moyens particuliers doivent alors être prévus.

Un but de l'invention est de remédier aux inconvénients des colliers de serrage connus de ce type et de créer un procédé de fabrication d'un collier de serrage évitant la réalisation d'une cosse sous forme séparée et en conséquence son assemblage avec la bande et permettant de ce fait une fabrication monobloc pouvant être complètement automatisée.

L'invention est matérialisée dans un procédé pour la fabrication d'un collier de serrage du type comportant une bande métallique munie vers une extrémité de profilages reliefs encoches ou analogues et vers son autre extrémité d'une cosse dans laquelle est logée une vis dont les filets viennent attaquer ces profilages pour le serrage du collier, caractérisé en ce qu'on part d'un flan destiné à former le collier, on prépare ce flan de manière à ménager une partie d'emboutissage, on forme par emboutissage dans cette partie, judicieusement en plusieurs passes, une cavité pour constituer la cosse du collier, on complète la mise en forme de la cosse tout en ménageant dans le fond de cette cavité un orifice de passage pour l'extrémité de la bande, on façonne la bande du collier et on la munit des profilages requis et on adapte et on fixe la vis du collier dans le logement formé par la cosse.

Suivant un mode de mise en oeuvre paraissant avantageux, on procède à certaines au moins de ces différentes opérations, alors que la partie formant la bande du collier est encore solidaire du flan de départ mais il va de soi que l'on peut également réaliser le découpage de la bande du collier avec la formation de la cosse ou au cours des opérations de mise en forme de celle-ci.

Judicieusement, la partie soumise à l'emboutissage se trouve sensiblement dans le plan du flan de départ, de sorte que la cavité formée par emboutissage dans cette partie présente un axe qui est perpendiculaire à la surface de ce flan et qui dans ce collier terminé, devra être ramené parallèlement à cette surface. En conséquence, on prévoit judicieusement dans la zone voisine de la partie d'emboutissage une courbure favorisant le redressement ultérieur de la cosse pour constituer le collier terminé qui, en outre, donne de la matière pour l'emboutissage.

Suivant une autre particularité encore, on ménage un rebord dans la partie d'emboutissage, au cours de l'opération d'emboutissage, et on découpe et on rabat ce rebord lors de la finition du collier, pour former deux pattes pouvant être ensuite rabattues sous la vis pour la rétention de celle-ci dans le logement constitué par la cosse.

Un collier de serrage de ce type présente un certain nombre d'avantages par rapport aux colliers existants. Ainsi, étant donné que la cosse est directement solidaire de la bande du collier et qu'elle forme,dans la partie dans laquelle les filets de la vis viennent en prise avec les profilages de la bande, un anneau fermé avec l'extrémité correspondante de cette bande, la résistance mécanique de l'ensemble est nettement augmentée par rapport à ce qui est le cas pour une cosse rapportée sur la bande par exemple par sertissage ou d'une autre manière. En outre, cette réalisation monobloc évite toute saillie sur la face intérieure de l'extrémité correspondante de la bande, résultant par exemple du sertissage usuel ce qui élimine la pénétration de la partie correspondante dans le tuyau serré au moyen du collier. Cette disposition supprimant le sertissage et réalisant une cosse venue directement de fabrication avec la bande permet en outre de ramener l'axe de la vis plus près de cette bande, ce qui, d'une part, permet d'obtenir une meilleure attaque des profilages de la bande et, d'autre part, réduit l'encombrement. La suppression du sertissage ou des moyens de fixation de la cosse sur le collier permet également de disposer, dans la partie terminale de la bande portant la cosse, d'une seule épaisseur de matière ce qui confère une bonne souplesse à cette partie de la bande, avantage important dans le cas de colliers de petit diamètre car il permet d'obtenir une meilleure concentricité du collier par rapport au tuyau. Enfin, on comprendra que le collier de serrage peut être fabriqué de façon automatique, ce qui réduit la main-d'oeuvre requise du fait notamment de la suppression de l'opération d'assemblage de la cosse avec la bande, et ce collier ne comporte plus maintenant que deux pièces, à savoir la bande qui a été mise en forme comme indiqué pour constituer la cosse et la vis venant en prise avec les profilages de cette bande.

La description qui va suivre, faite en regard des dessins annexés, donnés à titre non limitatif, permettra de mieux comprendre l'invention.

La figure 1 est une vue en coupe d'un collier de serrage suivant l'invention par la ligne I-I en figure 2.

La figure 2 est une vue en coupe de ce collier de serrage par la ligne II-II en figure 1.

La figure 3 est une vue en plan du dessus du collier de serrage en regardant depuis le haut sur la figure 1.

La figure 4 est une représentation destinée à faciliter la compréhension de l'invention, montrant les différents stades opératoires au cours de la fabrication du collier.

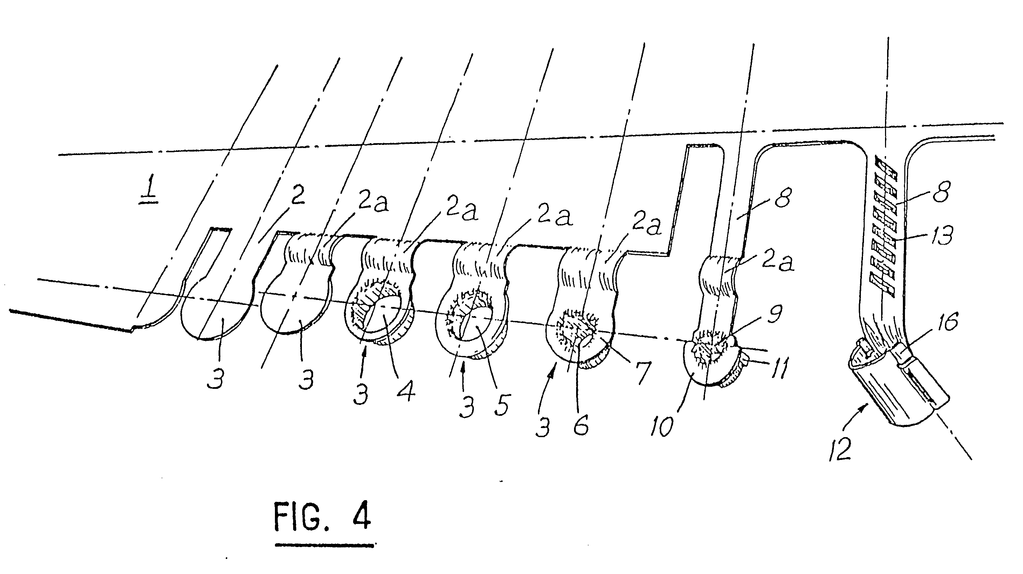

On se reportera tout d'abord à la figure 4 qui montre, comme indiqué les différents stades opératoires permettant la fabrication du collier de serrage. Pour faciliter la compréhension, on a représenté ces différents stades opératoires sur une même figure, afin de mieux mettre en évidence l'évolution au cours de la fabrication du collier à partir d'un flan, mais on comprendra que, dans la pratique, ces stades opératoires ne se suivent pas de la manière indiquée et sont subordonnés en ce qui concerne leur succession, aux machines automatiques utilisées et à l'organisation de la fabrication.

Dans le cas de la figure 4, on part d'un flan de métal qui est indiqué en 1 et qui est tout d'abord préparé par découpe pour ménager une partie de bande 2 et une tête 3 de forme générale circulaire ayant un diamètre, mesuré transversalement à l'axe longitudinal de la partie en forme de bande 2, supérieur à la largeur de cette partie 2.

Au cours de l'opération suivante, la partie 2a voisine du corps du flan 1 est incurvée pour une raison qui sera indiquée plus loin, la tête 3 demeurant en principe parallèle au plan du flan 1.

Cette opération est suivie de plusieurs passes d'emboutissage qui sont indiquées en 4, 5 et 6. Au cours de ces passes d'emboutissage successives, on forme dans la partie constituant la tête 3 une cavité de profondeur croissante, mais de diamètre allant en diminuant en ménageant chaque fois autour de cette cavité de profondeur croissante une collerette 7 entourant la cavité 6.

La phase de travail suivante consiste à effectuer, par emboutissage et détourage, une mise en forme de l'ébauche, en vue de l'obtention du collier de serrage définitif. On a indiqué en 8 la bande qui constituera la bande du collier, dont la longueur a été ici réduite pour faciliter la représentation en 2a la partie bombée qui a été réalisée au début de la fabrication et en 9 la cavité qui a reçu maintenant la forme requise pour constituer la cosse, c'està-dire qui présente dans le prolongement de la bande 8 une partie sensiblement plane servant d'appui à la bande, tandis qu'elle comporte une partie incurvée en "tunnel" à l'opposé de cette bande cette cavité étant entourée d'une collerette 10 dont les zones voisines de la bande 8 ont été abattues. Des parties latérales profilées sont également ménagées en 11 dans la cosse, pour une raison qui sera indiquée plus loin et le fond de cette cosse reçoit une fente (non visible sur la figure 4) pour le passage de la bande.

La phase de travail suivante consiste à effectuer d'une part, le calibrage de la cosse, qui est indiqué en 12 dans la partie droite de la figure 4, le redressement de la collerette 10 qui vient se placer dans le prolongement de la cosse 12, ainsi que le redressement de l'ensemble de cette cosse par rapport à la bande 8, redressement qui est facilité par la présence de la partie incurvée 2a mentionnée précédemment. Cette phase de travail est complétée par la frappe de la bande en vue de la formation dans celle-ci des profilages 13 qui sont prévus normalement vers l'extrémité de la bande opposée à la cosse. Ici encore pour des raisons de facilité de représentation, on a donné à la bande 8 du collier une longueur nettement inférieure à ce qui est le cas normalement, mais on comprendra que cette longueur de la bande est déterminée en fonction du diamètre du serrage nominal du collier et que les profilages 13 sont comme indiqué prévus dans la partie de la bande opposée à la cosse 12. Le collier ainsi réalisé peut alors être séparé du flan 1, et une vis peut être placée dans le logement ménagé par la cosse 12.

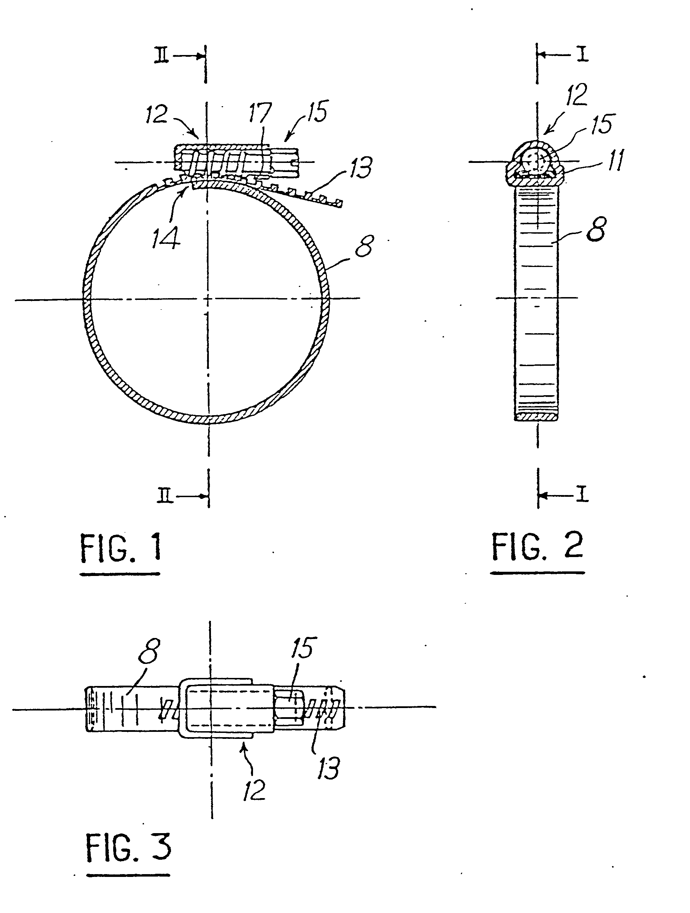

On se reportera maintenant aux figures 1 à 3 qui montrent le collier ainsi réalisé. Sur ces figures on a indiqué en 8 la bande du collier qui est munie vers une extrémité des profilages 13 mentionnés et vers l'autre extrémité d'une cosse monobloc 12 obtenue de la manière indiquée précédemment. On a indiqué dans le fond de la cosse 12 à l'extrémité correspondante de la bande 8 un orifice 14 destiné au passage de la bande. La vis 15 est placée dans le logement ménagé par la cosse, ses filets étant en prise avec les profilages 13 de la bande. Après l'introduction en place de la vis les parties latérales 16 (figure 4) constituées par les extrémités de la collerette 10 redressée ont été rabattues sous la vis, entre son filetage et sa tête comme indiqué en 17 sur la figure 1, pour assurer sa rotation.

On voit que, lors de l'utilisation du collier la vis 15 vient en butée contre le fond du logement ménagé par la cosse 12 la bande 13 étant guidée latéralement par les parties profilées 11 mentionnées précédemment.

On comprend également que le procédé suivant l'invention permet une fabrication automatique d'un collier monobloc présentant les avantages spécifiés, notamment une cosse de grande résistante du fait de son profil fermé à parois épaisses résultant de sa formation par emboutissage.

Des modifications peuvent être apportées aux modes de mise en oeuvre décrit, dans le domaine des équivalences techniques sans s'écarter de l'invention.

## Revendications

1. Procédé pour la fabrication d'un collier de serrage du type comportant une bande métallique munie vers une extrémité de profilages reliefs, encoches ou analogues et vers son autre extrémité d'une cosse dans laquelle est logée une vis dont les filets viennent attaquer ces profilages, pour le serrage du collier caractérisé en ce qu'on part d'un flan (1) destiné à former le collier, on prépare ce flan de manière à ménager une partie, d'emboutissage (2-3) on forme par emboutissage dans cette partie judicieusement en plusieurs passes, une cavité (6) pour constituer la cosse du collier on complète la mise en forme de la cosse (9) tout en ménageant dans le fond de cette cavité l'orifice de passage pour l'extrémité de la bande on façonne la bande (8) du collier et on la munit des profilages (13) requis, et on adapte et on fixe la vis (15) du collier dans le logement formé par la cosse.

2. Procédé suivant la revendication 1, caractérisé en ce qu'on procède à certaines au moins de ces différentes opérations alors que la partie formant la bande du collier est encore solidaire du flan de départ.

3. Procédé suivant la revendication 1, caractérisé en ce qu'on réalise d'abord le découpage de la bande du collier avant la formation de la cosse ou au cours des opérations de mise en forme de celle-ci.

4. Procédé suivant l'une quelconque des revendications précédentes caractérisé en ce que la partie soumise à l'emboutissage se trouve sensiblement dans le plan du flan de départ de sorte que la cavité formée par emboutissage dans cette partie présente un axe qui est perpendiculaire à la surface de ce flan et on ramène cet axe parallèlement à la surface du flan au cours d'un stade opératoire ultérieur.

5. Procédé suivant la revendication 4 caractérisé en ce qu'on prévoit avant l'emboutissage dans la zone voisine de la partie d'emboutissage une courbure favorisant le redressement ultérieur de la cosse pour constituer le collier terminé.

6. Procédé suivant l'une quelconque des revendications précédentes, caractérisé en ce qu'on ménage un rebord dans la partie d'emboutissage au cours de l'opération d'emboutissage et on découpe et on rabat ce rebord lors de la finition du collier pour former deux pattes pouvant être ensuite rabattues sous la vis pour la rétention de celle-ci dans le logement constitué par la cosse.

7. Procédé suivant l'une quelconque des revendications précédentes, caractérisé en ce qu'on effectue la mise en forme de la cosse vers la fin de l'opération d'emboutissage pour ménager une base de forme plane et une partie incurvée en "tunnel", cette base de forme plane se trouvant dans le collier terminé dans le prolongement de la bande du collier pour servir d'appui à l'extrémité opposée de cette bande.

8. Procédé suivant l'une quelconque des revendications précédentes, caractérisé en ce que, lors de la mise en forme de la cosse, on ménage deux profilages latéraux servant de guides pour les bords de l'autre extrémité de la bande.

## Patentansprüche

1. Verfahren zur Herstellung einer Schlauchklemme mit einem Metallband, das an einem Ende mit Erhebungen, Reliefs, Kerbungen od. dgl. und an seinem anderen Ende mit einer Kausche versehen ist, in der eine Schraube gelagert ist, deren Schraubengänge in die Erhebungen eingreifen, um die Schlauchklemme anzuziehen,
dadurch gekennzeichnet,
daß ausgehend von einer Platte (1) zum Formen der Schlauchklemme diese Platte derart vorbereitet wird, daß ein Teil (2-3) ausgestanzt wird, in diesem Teil vorsichtig und in mehreren Durchgängen eine Höhlung (6) gepreßt wird, die die Kausche der Klemmschelle bildet, die Formung der Kausche (9) vervollständigt wird, indem in den Boden dieser Höhlung die Durchtrittsöffnung für das Ende des Bandes eingearbeitet wird, das Band (8) der Klemmschelle in Form gebracht und mit den erforderlichen Erhöhungen (13) versehen wird und die Schraube (15) der Klemmschelle in dem durch die Kausche gebildeten Lager eingepaßt und befestigt wird.

2. Verfahren nach Anspruch 1,
dadurch gekennzeichnet,
daß mindestens einige dieser verschiedenen Verfahrensschritte durchgeführt werden, während der Teil, der das Band der Klemmschelle bildet, noch mit der Ausgangsplatte verbunden ist.

3. Verfahren nach Anspruch 1,
dadurch gekennzeichnet,
daß zuerst das Band der Klemmschelle ausgeschnitten wird, bevor die Kausche gebildet wird oder daß dies während der Formgebung dieser Kausche geschieht.

4. Verfahren nach einem der vorstehenden Ansprüche,
dadurch gekennzeichnet,
daß der gestanzte Teil sich ungefähr in der Ebene der Ausgangsplatte befindet, derart, daß die in diesem Teil durch Pressen gebildete Höhlung eine Achse aufweist, die senkrecht zu der Oberfläche der Platte verläuft und daß diese Achse in einem späteren Verfahrensschritt in eine Richtung, parallel zur Oberfläche der Platte gebracht wird.

5. Verfahren nach Anspruch 4,

dadurch gekennzeichnet,

daß vor dem Stanzen in dem zu dem ausgestanzten Teil benachbarten Bereich eine Wölbung vorgesehen wird, die das spätere Umbiegen der Kausche zur Bildung der endgültigen Klemme erleichtert.

6. Verfahren nach einem der vorstehenden Ansprüche,

dadurch gekennzeichnet,

daß während des Stanzens in dem ausgestanzten Teil ein Rand vorgesehen wird, der während der Endbearbeitung der Klemme ausgeschnitten und umgeschlagen wird, um zwei Zungen zu bilden, die anschließend unter der Schraube umgeschlagen werden können, um diese in dem Lager festzuhalten, das durch die Kausche gebildet wird. 7. Verfahren nach einem der vorstehenden Ansprüche,

dadurch gekennzeichnet,

daß die Formgebung der Kausche am Ende des Stanzvorgangs erfolgt, um eine ebene Basis und einen tunnelförmig gebogenen Teil zu bilden, wobei die ebene Basis sich bei der fertigen Klemme in der Verlängerung des Bandes der Klemme befindet, um als Auflage für das gegenüberliegende Ende dieses Bandes zu dienen.

8. Verfahren nach einem der vorstehenden Ansprüche,

dadurch gekennzeichnet,

daß während der Formgebung der Kausche zwei seitliche Kerbungen gebildet werden, die als Führungen für die Ränder des anderen Endes des Bandes dienen.

## Claims

1. Process for manufacturing a clamp of the type comprising a metallic band provided at one end with shapings, bulges, notches or the like, and at its other end with a socket in which is housed a screw the threads of which attack said shapings for tightening the clamp, characterized in that it consists in starting from a blank (1) designed to constitute the clamp, preparing the clamp so as to provide a stamping part (2-3), stamping in said part, advantageously in several passes, a recess (6) constituting the socket, completing the shaping of the socket (9) while providing in the bottom of said recess an orifice for the passage of the end of the band, shaping the band (8) of the clamp and providing said band with the required shapings (13), adapting and fixing the screw (15) of the clamp into the recess formed by the socket.

2. Process according to claim 1, characterized in that at least part of these different operations are carried out while the part constituting the band of the clamp is still integral with the starting blank.

3. Process according to claim 1, characterized in that the band of the clamp is first cut before forming the socket or during the shaping of the latter.

4. Process according to any one of the preceding claims, characterized in that the part subjected to the stamping is substantially situated in the plane of the starting blank, so that the axis of the recess formed by stamping in said part is perpendicular to the surface of said blank, and said axis is brought in parallel to the surface of the blank during a subsequent step of the operation.

5. Process according to claim 4, characterized in that, in the area close to the stamping part, a curve helping the subsequent straightening up of the socket for constituting the finished clamp, is provided before the stamping.

6. Process according to any one of the preceding claims, characterized in that it consists in providing a rim in the stamping part during the stamping operation, cutting and folding back said rim when finishing the clamp in order to form two lugs adapted to be subsequently folded back under the screw for holding it in the recess constituted by the socket.

7. Process according to any one of the preceding claims, characterized in that the shaping of the socket is carried out at the end of the stamping operation to provide a planar base and a tunnel-shaped bent part, said planar base being located in the finished clamp, in extension of the clamp band to act as support for the opposite end of this band.

8. Process according to any one of the preceding claims, characterized in that during the shaping of the socket, two lateral ribs are provided for guiding the edges of the other end of the band.

FIG. 1

FIG. 2

FIG. 3

FIG. 4

0 089 438